# EUROPEAN PATENT APPLICATION

(11) **EP 4 765 429 A1**
(43) Date of publication of application: **24.06.2026**
(21) Application number: 25809945.6
(22) Date of filing: 14.04.2025
(51) Int. Cl.: H01M 50/383, H01M 10/658, H01M 50/30, H01M 50/289, H01M 50/249

(54) **BATTERY MODULE, AND BATTERY PACK AND VEHICLE INCLUDING SAME**

(30) Priority: 09.05.2024 KR 20240061373
(71) Applicant: LG Energy Solution, Ltd., Seoul 07335 (KR)
(72) Inventor: LEE, Joo-Hyoung, Daejeon 34122 (KR); JUNG, Hye-Mi, Daejeon 34122 (KR)
(74) Representative: Plasseraud IP
(86) International application number: PCT/KR2025/005039
(87) International publication number: WO 2025/234632

(57) **Abstract**

The present disclosure relates to a battery module including: a plurality of battery cells; a module case configured to store the plurality of battery cells and having a plurality of venting holes formed on one side thereof; and a barrier member provided inside the module case and configured to partition the plurality of battery cells into a plurality of cell groups and to cover the venting hole corresponding to each cell group.

## Description

### TECHNICAL FIELD

The present disclosure relates to a battery module, and a battery pack and vehicle including the same. Specifically, the present disclosure relates to a battery module capable of suppressing thermal propagation inside the battery module, and a battery pack and vehicle including the same.

This application is based on and claims priority from Korean Patent Application No. 10-2024-0061373, filed on May 09, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

Meanwhile, since a battery cell involves a chemical reaction during charging and discharging, its performance may deteriorate when used in environments exceeding the appropriate temperature. Moreover, if thermal control is not properly maintained at the appropriate temperature, there remains a potential risk of unexpected ignition or explosion. In addition, a battery module is configured in a structure in which such battery cells are densely stored inside a module housing. Therefore, if a thermal event occurs in any one of the battery cells, the high-temperature gas and flame discharged therefrom may propagate to adjacent battery cells, leading to a chain reaction of battery cell explosions, which poses a significant safety risk.

Therefore, conventional battery modules have venting holes on the upper or lower side of the module case to discharge venting gas or flames to the outside of the module case when a thermal event occurs in the battery cell. However, these conventional battery modules have problems in which excessive heat is concentrated on the side of the venting hole and in which the discharged flames or sparks are reintroduced through the venting hole, accelerating the thermal propagation to adjacent battery cells.

Therefore, there is a need to develop a structure capable of preventing, even if a thermal event occurs in some battery cells inside a battery module, gas or flames from spreading to other battery cells inside the battery module and causing thermal runaway, thereby suppressing and delaying thermal propagation.

### DISCLOSURE

### Technical Problem

The present disclosure is designed to solve the problems of the related art, and therefore the present disclosure is directed to providing a battery module capable of effectively preventing or delaying thermal runaway propagation between battery cells by clearly partitioning and separating the battery cells.

The present disclosure is also to provide a battery pack and vehicle including such a battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a plurality of battery cells; a module case configured to store the plurality of battery cells and having a plurality of venting holes formed on one side thereof; and a barrier member provided inside the module case and configured to partition the plurality of battery cells into a plurality of cell groups and to cover the venting hole corresponding to each cell group.

The module case may have a first venting hole formed on one side of the module case, and a second venting hole formed on the other side of the module case.

The first venting hole and the second venting hole may be arranged to be staggered from each other.

The barrier member may be configured by bending a single plate multiple times.

The barrier member may be bent multiple times to form a plurality of storage spaces, and the storage spaces may be configured to store the cell groups, respectively.

The storage space may be configured to have an opening toward the opposite side of the venting hole.

The opening of the storage space may be disposed to be staggered from the venting hole.

The barrier member may be configured to be bent and may include a horizontal portion configured to extend along a stacking direction of the battery cells and cover the venting hole, and a vertical portion configured to extend along a height direction of the battery cell.

The horizontal portion may have a first horizontal portion configured to cover a lower portion of the cell group, and a second horizontal portion configured to cover an upper portion of the cell group.

The first horizontal portion and the second horizontal portion may be arranged to be staggered from each other.

The barrier member may have an inclined portion configured such that the horizontal portion is at least partially inclined toward the venting hole.

The horizontal portion may be at least partially configured in a form of a mesh.

In another aspect of the present disclosure, there is provided a battery pack including a battery module according to the present disclosure.

In addition, in another aspect of the present disclosure, there is provided a vehicle including a battery pack according to the present disclosure.

### Advantageous Effects

According to one aspect of the present disclosure, high-temperature gas or flames generated from the battery cells inside a battery module can be vented in various directions and smoothly discharged to the outside of the battery module, thereby preventing or delaying thermal runaway propagation due to an increase in the internal pressure of the battery module. Therefore, the safety and reliability of the battery module can be ensured.

In addition, according to another aspect of the present disclosure, since the venting hole is covered by the barrier member, it is possible to prevent the venting gas, flames, or sparks from flowing back into the battery module through the venting hole. Accordingly, the occurrence of a fire may be suppressed in the battery module.

In addition, according to another aspect of the present disclosure, it is possible to effectively prevent or delay, even if a thermal event occurs in some battery cells inside the battery module, gas or flames from spreading to other battery cells inside the battery module and causing thermal runaway by clearly partitioning and separating cell groups inside the battery module using barrier members.

**In** addition, according to another aspect of the present disclosure, since the barrier member is configured in a zigzag shape by multiple bends, a plurality of cell groups can be partitioned, thereby improving productivity when manufacturing the battery module.

In addition, according to another aspect of the present disclosure, since the barrier member fixes the cell group, it is possible to prevent the battery cell from being deformed or damaged when thermal runaway occurs inside the battery module or when the battery cell swells. Therefore, the structural stability of the battery module can be secured.

In addition, according to another aspect of the present disclosure, it is possible to prevent or delay events, such as fire or explosion, due to thermal runaway of a battery pack including a plurality of battery modules or a device equipped with them.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a top perspective view of a battery module according to an embodiment of the present disclosure.
FIG. 2 is a bottom perspective view of a battery module according to an embodiment of the present disclosure.
FIG. 3 is an exploded perspective view of a battery module according to an embodiment of the present disclosure.
FIG. 4 is a cross-sectional view of a battery module according to an embodiment of the present disclosure, which may be a cross-sectional view, for example, taken along line I - I' in FIG. 1.
FIG. 5 is a perspective view of a barrier member included in a battery module according to an embodiment of the present disclosure.
FIG. 6 is an exploded perspective view of a barrier member and a cell group included in a battery module according to an embodiment of the present disclosure.
FIG. 7 is an enlarged view of part A in FIG. 4.
FIG. 8 is a cross-sectional view of a battery module to which a barrier member is applied according to another embodiment of the present disclosure.
FIG. 9 is a perspective view of a barrier member included in a battery module according to another embodiment of the present disclosure.
FIG. 10 is a cross-sectional view of a battery module to which a barrier member is applied according to another embodiment of the present disclosure.
FIG. 11 is a schematic perspective view of a battery pack including a battery module according to an embodiment of the present disclosure.
FIG. 12 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, i.e., a stacking direction of the battery cells, the Y-axis direction may indicate a front-back direction, i.e., a longitudinal direction of the battery cell, perpendicular to the X-axis direction on the horizontal plane (X-Y plane), and the Z-axis direction may indicate an up-down direction (vertical direction), i.e., a height direction of the battery cell, perpendicular to both the X-axis direction and the Y-axis direction.

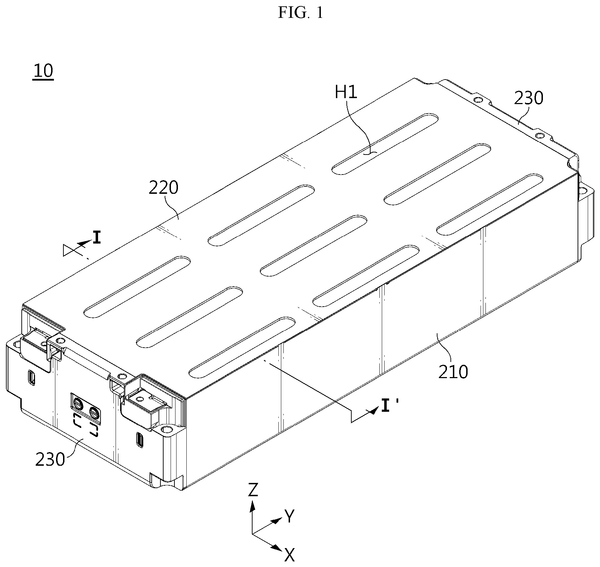

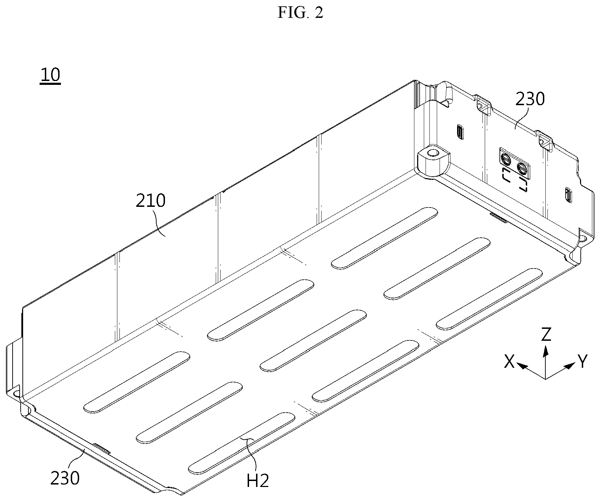

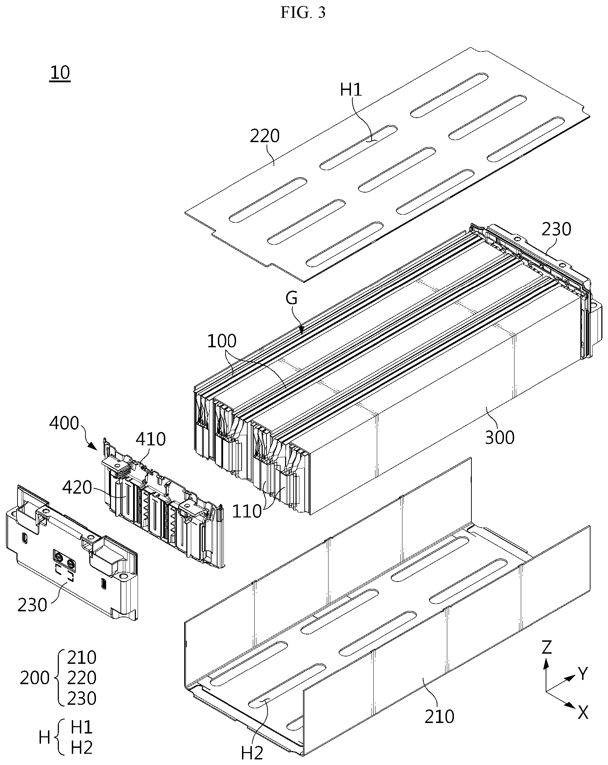

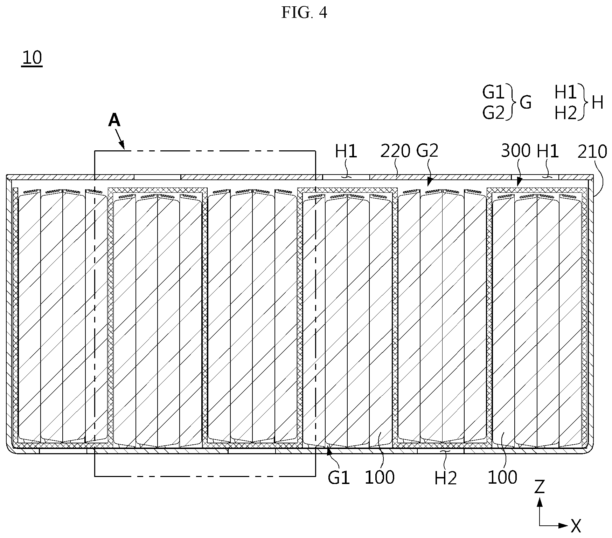

FIG. 1 is a top perspective view of a battery module according to an embodiment of the present disclosure, FIG. 2 is a bottom perspective view of a battery module according to an embodiment of the present disclosure, and FIG. 3 is an exploded perspective view of a battery module according to an embodiment of the present disclosure. In addition, FIG. 4 is a cross-sectional view of a battery module according to an embodiment of the present disclosure, which may be a cross-sectional view, for example, taken along line I - I' in FIG. 1.

Referring to FIGS. 1 to 4, a battery module 10 according to an embodiment of the present disclosure may include a battery cell 100, a module case 200, and a barrier member 300.

A plurality of battery cells 100 may be provided. The plurality of battery cells 100 may be provided to be stacked in one direction. For example, as shown in FIG. 3, the plurality of battery cells 100 may be stacked along the left-right direction (X-axis direction).

The battery cell 100 may be a pouch-type secondary battery. The battery cell 100 may include an electrode assembly and a cell case that stores the electrode assembly. The cell case may have a receiving portion configured to store the electrode assembly, and a sealing portion formed by heat-fusing the edges of the receiving portion. The sealing portion may be provided on three of the four edges of the battery cell 100.

In addition, each of the plurality of battery cells 100 may have an electrode lead 110. The electrode lead 110 may be connected to the electrode assembly, and may extend to the outside of the cell case, functioning as an electrode terminal.

A pair of electrode leads 110 may be provided, and the pair of electrode leads 110 may extend outward from both ends of the battery cell 100, i.e., in the longitudinal direction (±Y-axis directions). In this case, the pair of electrode leads 110 may be a positive electrode lead and a negative electrode lead. The battery cell 100 may be configured such that two electrode leads 110 are located only at one end in the Y-axis direction, for example, at the end in the +Y-axis direction, as necessary.

The battery cell 100 may be provided to stand with the edge, which does not include the sealing portion, facing downward. As illustrated in FIG. 3 and other drawings, the plurality of battery cells 100 may be disposed side by side in the left-right direction (X-axis direction) while standing in the vertical direction (Z-axis direction). In this case, each battery cell 100 may have the sealing portions facing the front-back direction (Y-axis direction) and the upward direction (+Z-axis direction), and the receiving portion facing the left-right direction (X-axis direction).

In the case where the battery cells 100 are disposed as described above, it is easy to control the venting direction to one side, and edge cooling may be performed through the surface that does not include the sealing portion, thereby securing cooling performance.

The present disclosure is not limited to a specific type or shape of the battery cell 100, and various battery cells 100 known at the time of filing the present disclosure may be applied. In the present embodiment, although a pouch-type secondary battery with high energy density and easy stacking will be described as shown in the drawing, it is obvious that a cylindrical or prismatic secondary battery may also be applied to the battery cell 100.

In addition, the battery cell 100 of the present disclosure may indicate one battery or a group of batteries.

Meanwhile, referring to FIG. 3, the battery module 10 of the present disclosure may further include a bus-bar frame assembly 400. The bus-bar frame assembly 400 may be provided inside the module case 200 and configured to cover at least one side of the plurality of battery cells 100. In the present embodiment, as shown in FIG. 3, the bus-bar frame assembly 400 may be coupled to the front and rear sides of the plurality of battery cells 100.

The bus-bar frame assembly 400 may include a bus-bar frame 410 and a plurality of bus-bars 420. The bus-bar frame 410 may be disposed to be coupled substantially to the front and rear sides of the plurality of battery cells 100. The bus-bar frame 410 may have slits through which the electrode leads 110 of the battery cells 100 extend outward in the +Y-axis or -Y-axis direction. In addition, the bus-bar frame 410 may be formed of a material having electrical insulating properties, such as a plastic material, and configured such that the bus-bar 420 may be attached to the outer surface.

The plurality of bus-bars 420, as a means for connecting the battery cells 100 in series and/or in parallel, may be formed of a metal material, such as copper, aluminum, nickel, etc., and may be configured in the shape of bars. The electrode leads 110 of the battery cells 100 may pass through the slits of the bus-bar frame 410 and extend outside the bus-bar frame 410, and the extending portions may be attached to the surface of the bus-bar 420 by welding or the like.

The module case 200 may be configured to store a plurality of battery cells 100. Specifically, an inner space may be formed in the module case 200, and a plurality of battery cells 100 may be stored in the inner space.

A venting hole H may be formed in the module case 200. A plurality of venting holes H may be provided at regular intervals in the horizontal direction (X-axis and Y-axis directions). The venting hole H may be configured to discharge venting gas generated from the battery cell 100 to the outside of the module case 200.

The venting holes H may be formed on at least one side of the module case 200. For example, as shown in FIGS. 1 to 4, the venting holes H may be formed on the upper and lower sides of the module case 200. As a result, directional venting in both the upper and lower directions of the battery module 10 may be possible through the venting holes H.

The barrier member 300 may be provided inside the module case 200. The barrier members 300 may be configured to group the plurality of battery cells 100. The barrier members 300 may be configured to partition the plurality of battery cells 100 into a plurality of cell groups G. For example, as shown in FIG. 4, the barrier member 300 may be configured to group the battery cells 100 into sets of four. That is, one cell group G may include four battery cells 100.

According to the above-implemented configuration of the present disclosure, the plurality of cell groups G may be partitioned or separated to prevent the gas or flame generated in any cell group G from spreading to another neighboring cell group G, thereby preventing thermal propagation. As a result, thermal runaway propagation between the battery cells 100 may be prevented or delayed.

The barrier member 300 may be formed of a material having excellent heat resistance and/or fire resistance. For example, the barrier member 300 may be formed of a mica material. Therefore, it may be configured to maintain a sealing structure without deformation even at high temperature and high pressure.

In addition, the barrier member 300 may be made of a compressible material. For example, the barrier member 300 may have any one of silicone, aerogel, polyurethane, or the like. Accordingly, the barrier member 300 may be configured to be in close contact with the adjacent battery cell 100.

In addition, the barrier member 300 may have a material having electrical insulating properties. Accordingly, electrical insulation may be secured between the battery cells 100.

Meanwhile, the venting hole H may be provided for each cell group G to correspond thereto. In this case, the barrier member 300 may be configured to cover the venting hole H corresponding to each cell group G.

More specifically, the barrier member 300 may be configured to cover some of the six sides of the cell group G. In this case, the barrier member 300 may be configured to cover the side of the cell group G located toward the venting hole H. For example, if the venting hole H is provided above the cell group G, the barrier member 300 may be configured to cover the left side, the right side, and the upper side of the cell group G.

According to the above-implemented configuration of the present disclosure, since the venting hole H is covered by the barrier member 300, the venting gas or flame discharged to the outside through the venting hole H may be prevented from flowing back into the battery module 10. Therefore, the thermal propagation to the neighboring battery modules 10 may be minimized, thereby effectively preventing or delaying heat runaway propagation, and thus the safety and reliability of the battery module 10 may be ensured.

In particular, if flames or sparks flow back into the battery module 10 through the venting hole H, they may react with oxygen inside the battery module 10, causing an explosion. However, according to the above-implemented configuration of the present disclosure, sparks or the like may be prevented from flowing into the battery module 10 by the barrier member 300, thereby suppressing fire from occurring inside the battery module 10.

Referring to FIG. 3, the module case 200 may include a case body 210 and a top plate 220. The case body 210 may be configured to have at least an upper opening. For example, the case body 210 may have an upper opening, and front and rear openings. That is, the case body 210 may be configured as a U-frame.

The case body 210 may be configured as a metal material having rigidity and heat resistance in order to physically or chemically protect the stored battery cells 100.

The top plate 220 may be provided to form the upper side of the module case 200. The top plate 220 may be coupled to cover the upper opening of the case body 210. The top plate 220 may be welded to the case body 210. In this case, the top plate 220 and the case body 210 may be coupled into a square tube with front and rear openings.

The module case 200 may include end plates 230 provided on the front and rear openings of the case body 210. The end plate 230 may be welded to the case body 210. Although not shown in the drawings for convenience, the end plate 230 may be configured such that, for example, an inner surface is made of an insulating material and an outer surface is made of a metal material. In addition, the end plate 230 may be partially provided with holes or slits for exposing components that are required to be exposed to the outside, such as a positive electrode terminal and negative electrode terminal or a connector of the battery module 10.

In addition, the module case 200 may be formed in various other shapes. For example, the module case 200 may include a box-shaped lower case having an upper opening and an upper cover configured to cover the upper opening of the lower case. Alternatively, the module case 200 may be configured as a mono-frame.

The module case 200 may have a first venting hole H1 and a second venting hole H2. The first venting hole H1 may be formed on one side of the module case 200. The second venting hole H2 may be formed on the other side of the module case 200. That is, the first venting hole H1 and the second venting hole H2 may be formed on different sides of the module case 200 from each other. Accordingly, the venting gas generated in the cell group G may be discharged in various directions, instead of only one direction.

In particular, the first venting hole H1 and the second venting hole H2 may be formed on opposite sides of the module case 200. That is, the first venting hole H1 and the second venting hole H2 may be formed on opposite sides of the module case 200 to each other. According to the above-implemented configuration of the present disclosure, since the venting path may be separated into two directions, heat concentration in one direction may be prevented. Accordingly, thermal propagation of the battery module 10 may be suppressed or prevented.

In this case, as disclosed in the embodiments illustrated in FIGS. 1 to 4, the first venting hole H1 may be formed on the upper side of the module case 200, for example, on the top plate 220. In addition, the second venting hole H2 may be formed on the lower side of the module case 200. Accordingly, the venting gas or flame generated in the cell group G may be discharged upward or downward through the venting hole H provided above or below the cell group G.

According to the above-implemented configuration of the present disclosure, the venting gas or flame may be prevented from moving to another adjacent cell group G along the stacking direction of the battery cells 100. In addition, the venting gas or flame may be smoothly discharged in the vertical direction without interference with other adjacent structures.

Furthermore, the first venting holes H1 and the second venting holes H2 may be arranged to be staggered from each other. That is, the first venting holes H1 and the second venting holes H2 may be arranged to be staggered from each other along the horizontal direction, for example, the stacking direction of the battery cells 100. The first venting hole H1 and the second venting hole H2 may be configured at opposite positions for each cell group G.

More specifically, referring to FIG. 4, the barrier member 300 may be configured to separate the first cell group G1 and the second cell group G2 from each other. The first cell group G1 and the second cell group G2 may be disposed alternately along the stacking direction of the battery cell 100 by the barrier member 300.

In this case, the first venting hole H1 may be provided above the first cell group G1. The barrier member 300 may be configured to cover the upper side of the first cell group G. In addition, the second venting hole H2 may be provided below the second cell group G2. The barrier member 300 may be configured to cover the lower side of the second cell group G2.

According to the above-implemented configuration of the present disclosure, since the first venting hole H1 and the second venting hole H2 are provided to be staggered from each other, it is possible to minimize heat such as venting gas or flame from heading toward another cell group G.

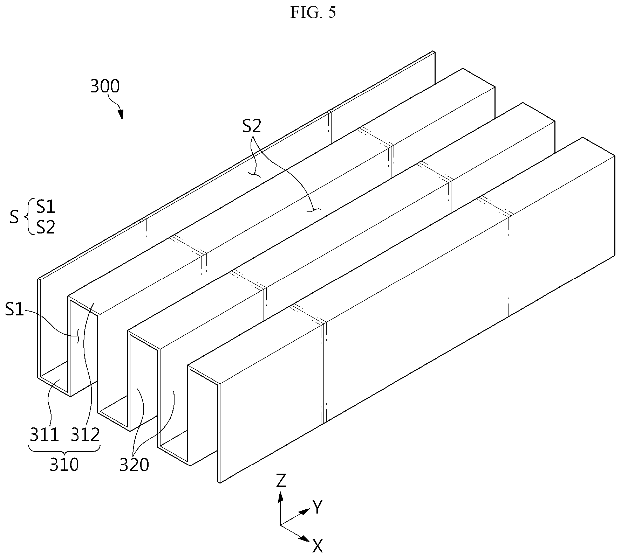

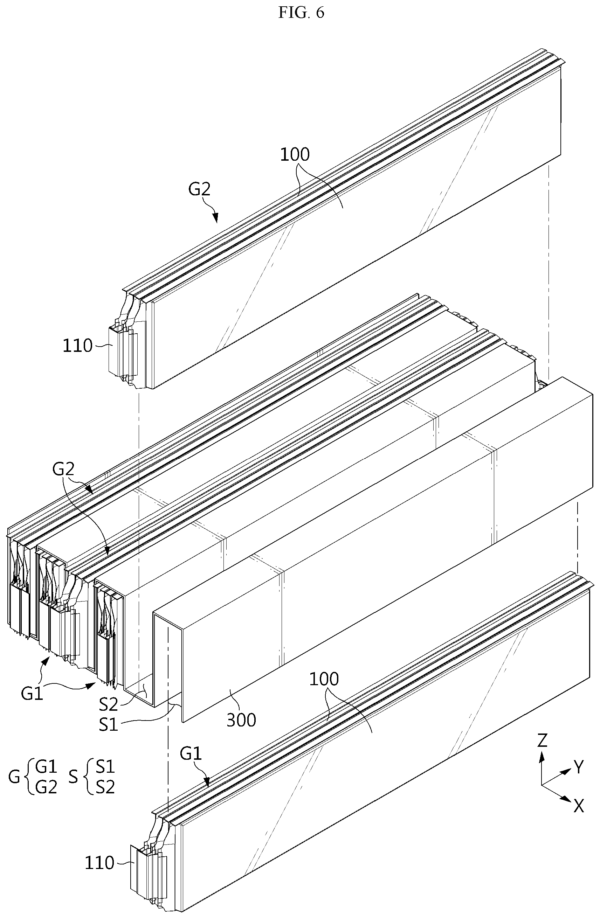

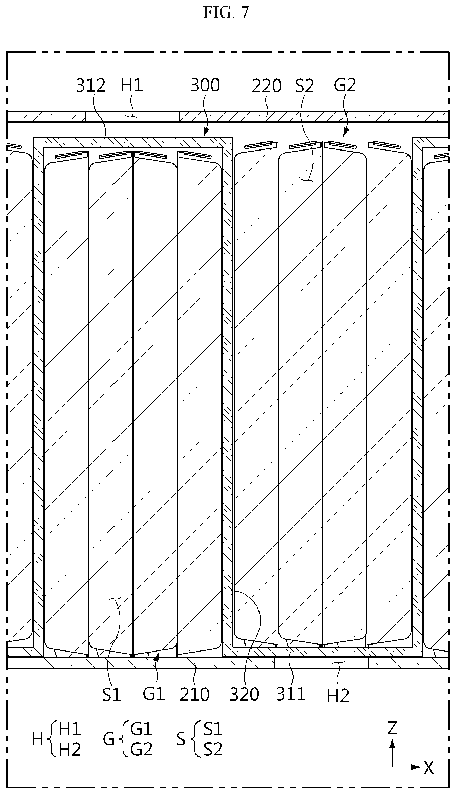

FIG. 5 is a perspective view of a barrier member included in a battery module according to an embodiment of the present disclosure, and FIG. 6 is an exploded perspective view of a barrier member and a cell group included in a battery module according to an embodiment of the present disclosure. FIG. 7 is an enlarged view of part A in FIG. 4.

Referring to FIG. 5 and FIG. 6, the barrier member 300 may be configured by bending a single plate multiple times. The barrier member 300 may be configured by bending a single plate in opposite directions multiple times. The barrier member 300 may be configured by bending a single plate at 180 degrees. Accordingly, the barrier member 300 may be configured in a zigzag shape. In addition, the barrier member 300 may be configured in a Z shape.

A plurality of barrier members 300 having the above configuration may be provided inside the module case 200. Alternatively, as disclosed in the embodiment illustrated in FIG. 6, a single barrier member 300 may be provided inside the module case 200 so as to cover all battery cells 100.

According to the above-implemented configuration of the present disclosure, since the barrier member 300 is configured in a zigzag shape through multiple bends, the plurality of cell groups G may be simply partitioned. Accordingly, productivity may be improved when manufacturing the battery module 10.

More specifically, the multiple bends of the barrier member 300 may produce multiple storage spaces S. That is, the multiple storage spaces S may be formed as the barrier member 300 is bent multiple times. The multiple storage spaces S may be provided alternately along the stacking direction of the battery cells 100.

The storage space S may be configured to store the cell group G. One cell group G may be provided in each storage space S. As a more specific example, the first storage space S1 may be configured to store the first cell group G1, and the second storage space S2 may be configured to store the second cell group G2.

In this case, the respective storage spaces S may be configured to have openings facing in different directions. The openings of the storage spaces S may be provided alternately. The openings of the storage spaces S may be arranged to alternately face upward and downward. For example, the first storage space S1 may be configured to have an opening facing downward, and the second storage space S2 may be configured to have an opening facing upward.

Referring to FIG. 7, one venting hole H may be provided for each storage space S. In this case, the storage space S may be configured to have an opening facing the opposite side of the venting hole H. For example, as disclosed in the embodiment illustrated in FIG. 7, the first venting hole H1 may be located above the first cell group G1, and the first storage space S1 may have an opening toward the lower side of the first cell group G1. On the other hand, the second venting hole H2 may be located below the second cell group G2, and the second storage space S2 may have an opening toward the upper side of the second cell group G2.

According to the above-implemented configuration of the present disclosure, the venting induction direction may be configured to differ between the first cell group G1 and the second cell group G2. Accordingly, the venting gas or the like generated from the cell group G inside the storage space S may be guided and discharged only toward the venting hole H without moving to another cell group G.

Furthermore, the openings of the storage spaces S and the venting holes H may be arranged to be staggered from each other. The openings of the storage spaces S and the venting holes H may be arranged to be staggered from each other along the horizontal direction, for example, the stacking direction of the battery cells 100. The opening of each storage space S may be provided between adjacent venting holes H.

For example, as disclosed in the embodiment illustrated in FIG. 7, the opening of the first storage space S1 may be disposed to be staggered from the second venting hole H2. In addition, the closed portion of the first storage space S1 may be configured to face the first venting hole H1.

In this case, the first storage space S1 may be configured to be in communication with the second venting hole H2. In addition, the second storage space S2 may be configured to be in communication with the first venting hole H1. In particular, the barrier member 300 may be configured to be spaced a predetermined distance apart from the first venting hole H1. Accordingly, the venting gas or flame generated from the second cell group G2 in the second storage space S2 may move in both the left and right directions, and may be discharged upward through the first venting hole H1.

According to the above-implemented configuration of the present disclosure, when a thermal event occurs in any battery cell 100 in the cell group G, the venting gas or flame generated in the battery cell 100 may be discharged to the outside of the battery module 10 through the venting holes H provided on the left and right sides of each cell group G. Therefore, since high-temperature gas or flame may be vented in various directions and smoothly discharged to the outside of the battery module 10, it is possible to prevent or delay thermal runaway propagation due to an increase in the internal pressure of the battery module 10.

Furthermore, according to the above-implemented configuration of the present disclosure, since heat is dissipated in both directions to prevent heat concentration on one side, thermal propagation may be more effectively suppressed or prevented in the battery module 10.

The structure of the barrier member 300 will be described in detail with reference to FIGS. 5 and 7. The barrier member 300 may be configured to be bent, and may include a horizontal portion 310 and a vertical portion 320. That is, the horizontal portion 310 and the vertical portion 320 may be defined by bending the barrier member 300 multiple times.

The horizontal portion 310 may be configured to extend along the stacking direction of the battery cells 100. The horizontal portion 310 may be configured in the form of a flat plate.

The vertical portion 320 may be configured to extend along the height direction of the battery cell 100. The vertical portion 320 may extend upward from the horizontal portion 310. The angle between the vertical portion 320 and the horizontal portion 310 may be approximately 90 degrees. The vertical portion 320 may be configured in the form of a flat plate.

The storage space S may be formed by one horizontal portion 310 and two vertical portions 320. The vertical portion 320 may be provided between adjacent cell groups G. For example, as disclosed in the embodiment illustrated in FIG. 7, the vertical portion 320 may be provided between the first cell group G1 and the second cell group G2. The vertical portion 320 may be provided on the left and right sides of the cell group G. That is, the vertical portion 320 may be configured to partition the plurality of cell groups G.

According to the above-described embodiment configuration of the present disclosure, since the cell group G is configured to be at least partially surrounded by the vertical portion 320 and the horizontal portion 310, thermal propagation between the battery cells 100 may be suppressed.

Moreover, the vertical portion 320 may be configured to fix the cell group G from both sides. According to the above-implemented configuration of the present disclosure, the barrier member 300 may pressurize the cell group G on both sides when the battery cells 100 swell, thereby suppressing the swelling of the battery cells 100. Accordingly, the barrier member 300 may contribute to the structural rigidity of the battery cells 100.

The horizontal portion 310 may have a first horizontal portion 311 and a second horizontal portion 312. The first horizontal portion 311 may be configured to cover the lower portion of the cell group G. That is, the first horizontal portion 311 may be provided lower than the second horizontal portion 312. The first horizontal portion 311 may be configured such that the second cell group G2 is seated thereon. In addition, the first horizontal portion 311 may be configured to face the second venting hole H2.

In addition, the second horizontal portion 312 may be configured to cover the upper portion of the cell group G. That is, the second horizontal portion 312 may be provided higher than the first horizontal portion 311. In addition, the second horizontal portion 312 may be configured to face the first venting hole H1.

The first horizontal portion 311 and the second horizontal portion 312 may be arranged to be staggered from each other. The first horizontal portions 311 and the second horizontal portions 312 may be arranged alternately with each other along the horizontal direction, for example, the arrangement direction of the cell groups G. For example, the first horizontal portion 311 may be provided at the lower portion, and the second horizontal portion 312 may be provided at the upper portion. The first horizontal portion 311, the second horizontal portion 312, and the vertical portion 320 may be formed as the barrier member 300 is configured in a Z shape.

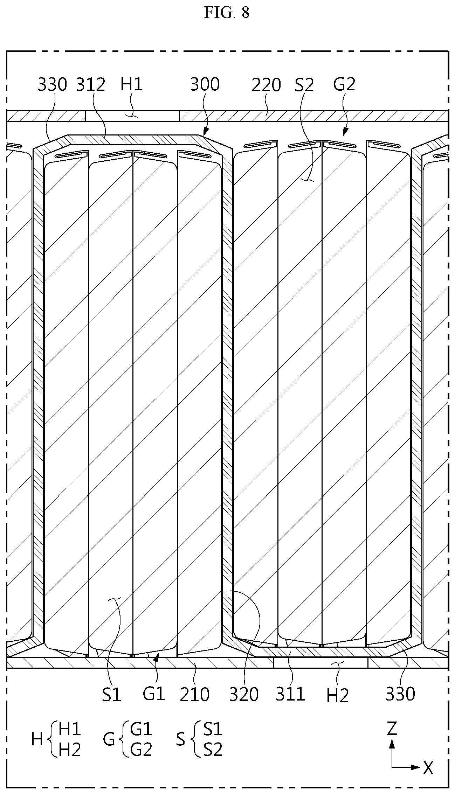

FIG. 8 is a cross-sectional view of a battery module to which a barrier member is applied according to another embodiment of the present disclosure.

As another embodiment, as disclosed in the embodiment illustrated in FIG. 8, the barrier member 300 may have an inclined portion 330. The inclined portion 330 may be a portion in which the horizontal portion 310 is configured to be at least partially inclined. The inclined portion 330 may be formed by bending the horizontal portion 310 of the barrier member 300 multiple times. The inclined portion 330 may be configured to guide venting gas or flame toward the venting hole H. The inclined portion 330 may be configured to be inclined toward the venting hole H. The inclined portion 330 may be configured in an oblique shape.

According to the above-implemented configuration of the present disclosure, venting gas or flame generated in any cell group G may be guided to the venting hole H by the inclined portion 330 and quickly discharged to the outside of the battery module 10 through the venting hole H.

Furthermore, according to the above-implemented configuration of the present disclosure, directional venting in both directions may be more effectively induced. Accordingly, heat may be quickly dispersed inside the cell group G, so that thermal propagation between the battery cells 100 may be prevented.

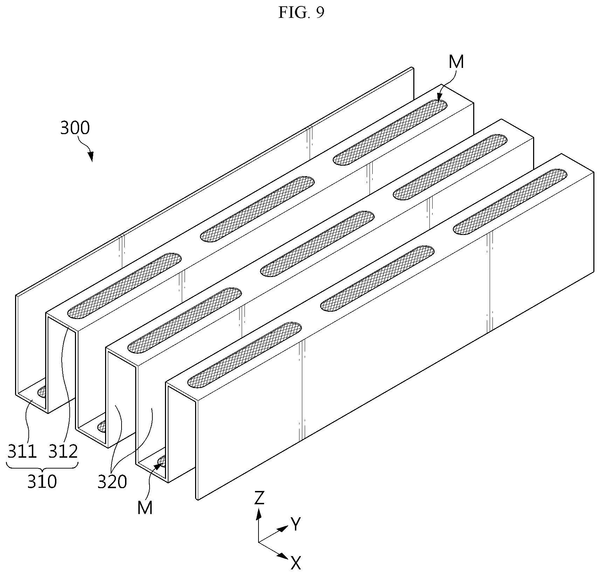

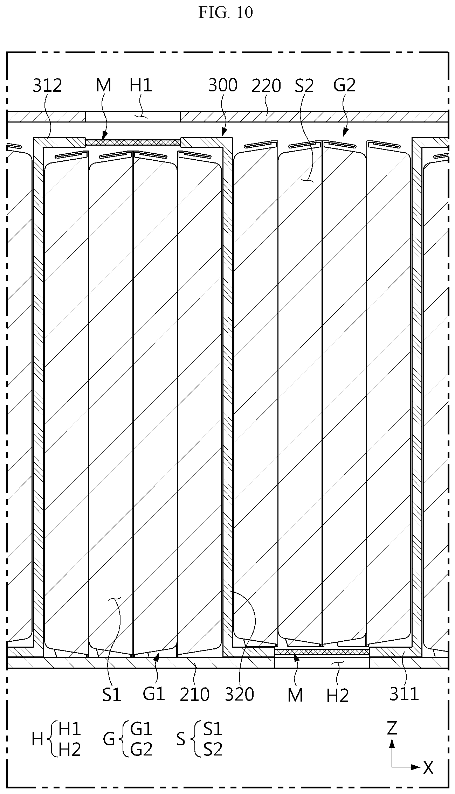

FIG. 9 is a perspective view of a barrier member included in a battery module according to another embodiment of the present disclosure, and FIG. 10 is a cross-sectional view of a battery module to which a barrier member is applied according to another embodiment of the present disclosure.

As another embodiment, the horizontal portion 310 may be configured at least partially in the form of a mesh. That is, the barrier member 300 may have a mesh M. The mesh M may be configured to filter flames and allow venting gas to pass therethrough. The mesh M may be configured such that a plurality of pores are formed in a plate-shaped member, or such that a plurality of wires are woven like a net. In this case, the pores may be configured to have a size capable of filtering flames discharged from the cell group G to the outside of the barrier member 300.

In particular, the mesh M may be provided at a position corresponding to the venting hole H. That is, the mesh M may prevent flames from being discharged to the outside of the module case 200 through the venting hole H and acting as a cause of ignition.

According to the above-implemented configuration of the present disclosure, the mesh structure formed at a position corresponding to the venting hole H may be configured to allow venting gas to pass therethrough while maximally suppressing flame from passing therethrough. Accordingly, not only may the exposure of flame to the outside of the module case 200 be minimized, but there is also an advantage in that the venting gas is able to be quickly discharged.

In addition, according to the above-implemented configuration of the present disclosure, the mesh M provided in the barrier member 300 may perform a function of screening particles (ejected substances) such as sparks. That is, the mesh structure formed in the barrier member 300 may effectively induce internal gas to be discharged to the outside, and also effectively implement physical blocking, restraint, or trapping of ignition factors such as high-temperature particles, sparks, or the like, thereby effectively reducing and suppressing particles such as sparks from leaking out to the outside. In addition, particles such as sparks that are discharged to the outside through another venting hole H may be suppressed from flowing back into the cell group G through the venting hole H.

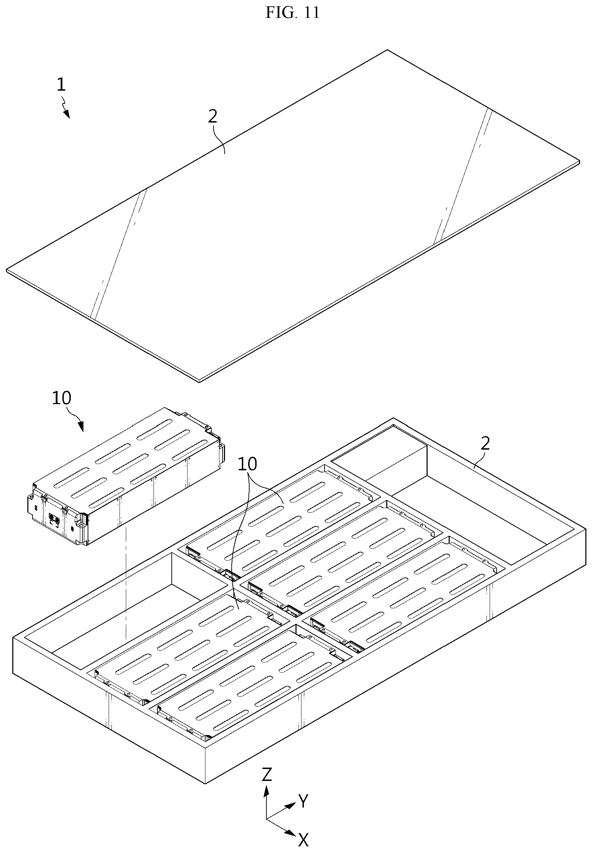

FIG. 11 is a schematic perspective view of a battery pack including a battery module according to an embodiment of the present disclosure.

Referring to FIG. 11, a battery pack 1 according to an embodiment of the present disclosure may include one or more battery modules 10 according to an embodiment of the present disclosure described above. The battery pack 1 according to the present disclosure may further include a pack case 2 for storing a BMS (Battery Management System), a current sensor, a fuse, and the like for integrated control of charging and discharging of one or more battery modules, and the components described above.

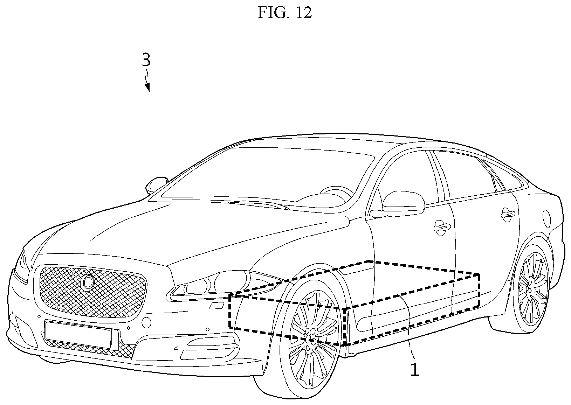

FIG. 12 is a schematic perspective view of a vehicle including a battery pack according to an embodiment of the present disclosure.

Referring to FIG. 12, a vehicle 3 according to an embodiment of the present disclosure may include one or more battery packs 1 according to an embodiment of the present disclosure or battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 may be operated by power supplied from a battery pack 1 or a battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a plurality of battery cells;
a module case configured to store the plurality of battery cells and having a plurality of venting holes formed on one side thereof; and
a barrier member provided inside the module case and configured to partition the plurality of battery cells into a plurality of cell groups and to cover the venting hole corresponding to each cell group.

2. The battery module according to claim 1,
wherein the module case has
a first venting hole formed on one side of the module case, and
a second venting hole formed on the other side of the module case.

3. The battery module according to claim 2,
wherein the first venting hole and the second venting hole are arranged to be staggered from each other.

4. The battery module according to claim 1,
wherein the barrier member is configured by bending a single plate multiple times.

5. The battery module according to claim 1,
wherein the barrier member is bent multiple times to form a plurality of storage spaces, and
the storage spaces are configured to store the cell groups, respectively.

6. The battery module according to claim 5,
wherein the storage space is configured to have an opening toward an opposite side of the venting hole.

7. The battery module according to claim 6,
wherein the opening of the storage space is disposed to be staggered from the venting hole.

8. The battery module according to claim 1,
wherein the barrier member is configured to be bent and comprises
a horizontal portion configured to extend along a stacking direction of the battery cells and cover the venting hole, and
a vertical portion configured to extend along a height direction of the battery cell.

9. The battery module according to claim 8,
wherein the horizontal portion has
a first horizontal portion configured to cover a lower portion of the cell group, and
a second horizontal portion configured to cover an upper portion of the cell group.

10. The battery module according to claim 9,
wherein the first horizontal portion and the second horizontal portion are arranged to be staggered from each other.

11. The battery module according to claim 8,
wherein the barrier member has
an inclined portion configured such that the horizontal portion is at least partially inclined toward the venting hole.

12. The battery module according to claim 8,
wherein the horizontal portion is at least partially configured in a form of a mesh.

13. A battery pack comprising a battery module according to any one of claims 1 to 12.

14. A vehicle comprising a battery module according to any one of claims 1 to 12.
